(19) **Europäisches Patentamt / European Patent Office / Office européen des brevets**

(11) **EP 3 174 363 A1**

(12) **EUROPEAN PATENT APPLICATION**

(43) Date of publication:
**31.05.2017 Bulletin 2017/22**

(21) Application number: **15306872.1**

(22) Date of filing: **26.11.2015**

(51) Int Cl.:
*H04W 84/04* (2009.01)      *H04W 88/04* (2009.01)
*H04W 8/00* (2009.01)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(71) Applicant: **ALCATEL LUCENT
92100 Boulogne-Billancourt (FR)**

(72) Inventors:
• **GACANIN, Haris
2018 Antwerpen (BE)**
• **AL-NAHHAL, Ibrahim
2018 Antwerpen (BE)**

(74) Representative: **ALU Antw Patent Attorneys
Intellectual Property and Standards
Copernicuslaan 50
2018 Antwerp (BE)**

(54) **MANAGEMENT SYSTEM FOR DETECTING A WIFI RANGE EXTENDER**

(57)      A management system for detecting α presence of α Wifi range extender in α telecommunication environment is provided. The telecommunication environment comprises α Wifi access network.

The management system comprises :
- α first collector to collect monitoring data comprising α first list of MAC addresses of connected devices, the connected devices being connected to α serving access point in the telecommunication environment; and
- α second collector to collect monitoring data comprising α second list of MAC addresses of access points, the access points being located within α Wifi access range of α user equipment connected to the serving access point in the telecommunication environment. The management system further comprises α correlator to correlate the first list with the second list and to identify thereby α common MAC address. The common MAC address being related to the Wifi range extender and confirms hereby its presence in the telecommunication environment.

Figure 1

**Description**

**Field of the Invention**

The present invention relates to a management system to detect a presence of a Wifi range extender in a telecommunication environment and a related method.

**Background**

Wi-Fi or Wifi is a local area wireless computer networking technology that allows electronic devices to network, mainly using the 2.4 gigahertz (12 cm) UHF and 5 gigahertz (6 cm) SHF ISM radio bands.

The IEEE 802.11 standard is a set of media access control (MAC) and physical layer (PHY) specifications for implementing such wireless local area network (WLAN) computer communication in the 2.4, 3.6, 5, and 60 GHz frequency bands. They are created and maintained by the IEEE LAN/MAN Standards Committee (IEEE 802).

A Wifi range extender takes an existing signal from a wireless router or wireless access point and rebroadcasts it to create a second network. When two or more hosts have to be connected with one another over the IEEE 802.11 protocol and the distance is too long for a direct connection to be established, a wireless repeater is used to bridge the gap. Such a IEEE 802.11 WiFi range-extender is thus used to overcome the coverage problems inside the footprint of access points. However, an unplanned IEEE 802.11 WiFi range-extender deployment can dramatically deteriorate neighbor users performance if it is not managed carefully by the management system. Thus, the management system should detect the presence of such an unmanaged Wifi extender firstly. The problem is that there is no remarkable thing that can distinguish a WiFi extender from all other connected devices of a serving access point. The WiFi extender appears to the serving access point as the same as all other connected devices. Since management of a WiFi range extender by the management system is important in order to proper manage WiFi coverage, either residential or public, it should be detected first.

So, the problem to be addressed is the detection of a non-managed WiFi range-extender which is installed behind a serving access point in order to help the management system to manage the network correctly. Via the TR-069 family standards the serving access point can obtain MAC addresses of the connected devices that are connected to the serving access point. Unfortunately, the access point is not able to make a distinction between the MAC address of a WiFi extender and the Mac addresses of other connected devices such as e.g. mobile phones, PCs, laptops ...etc. Similarly, a user equipment is enabled to detect the MAC addresses of its neighboring access points, including the WiFi range-extender, in its receiving range. However, the user equipment is not enabled to make a differentiation between the MAC addresses of the serving access points and one or more WiFi extender(s). Thus, it is not possible to make any decision either from the access point or either from the user equipment measurements in order to detect the presence of the WiFi extender.

**Summary**

An object of the present invention is to provide a solution to this problem i.e. to provide a management system to detect a presence of a Wifi range extender in a telecommunication environment and a method for use by this management system.

According to the invention this object is achieved due to leveraging the knowledge from both i.e. the serving access point and the user equipment, at the management system.

A management system for detecting a presence of a Wifi range extender in a telecommunication environment that comprises a femto access network and a radio access network comprises :

- a first collector for collecting monitoring data that comprises a first list of MAC addresses of connected devices, the connected devices being connected to the serving access point in the telecommunication environment; and
- a second collector for collecting monitoring data that comprises a second list of MAC addresses of access points, the access points being located within a wifi access range of a user equipment in the telecommunication environment that is connected to the same serving access point; and
- a correlator to correlate the first list with the second list and to identify thereby a common MAC address. In the event when indeed a common MAC address is identified, it is the MAC address of a present Wifi range extender and it confirms hereby the presence of the Wifi range extender in the telecommunication environment.

In this way the visibility of the extender at both ends i.e. the serving access point and the user equipment, is exploited. By correlating their respective information, the range-extender is either detected or it is not detected if it is not present in the network. The following basic steps are identified in the method:

1) Comparing the MAC addresses list obtained via the serving access point with the list of MAC addresses being obtained by one of the user equipments that are connected to the respective serving access point; and
2) Searching for potential common MAC address(es) between these two lists represents MAC address(es) of WiFi extender(s). In the event when a matching between these two lists is detected there is at least one WiFi extender connected to this target serving access point.
3) In the event when no matching is found, there is no WiFi extender in this environment.

Another characteristic feature of the present invention is that the correlator ot the management system further comprises :

-    a first determiner for determining a degree of correlation, called correlation percentage, between a MAC address of the first list and a MAC address of the second list; and
-    a second determiner for deciding upon a matching between the two MAC addresses in the event when the correlation percentage exceeds a predefined threshold and for thereby identifying the common MAC address. According to this method a correlation percentage between each MAC address of the first list with each MAC address of the second list is determined and compared to the predefined threshold. In the event when the correlation percentage exceeds the predefined threshold (T) for one (or more) of the correlated couples of MAC addresses, the presence of one (or more) Wifi range extender(s) can be confirmed.

A further characterizing embodiment of the present application is that the first determiner comprises a comparator for comparing the consecutive MAC characters of the MAC address of the first list with the consecutive MAC characters of the MAC address of the second list and for determining thereby the correlation percentage.
A final implementation feature is that the collecting steps are executed via anyone of a radio access layer and a wired line access layer.
It is to be noticed that the term 'comprising', used in the claims, should not be interpreted as being limitative to the means listed thereafter. Thus, the scope of the expression 'a device comprising means A and B' should not be limited to devices consisting only of components A and B. It means that with respect to the present invention, the only relevant components of the device are A and B.
The above and other objects and features of the invention will become more apparent and the invention itself will be best understood by referring to the following description of an embodiment taken in conjunction with the accompanying drawings.

**Brief Description of the Figures**

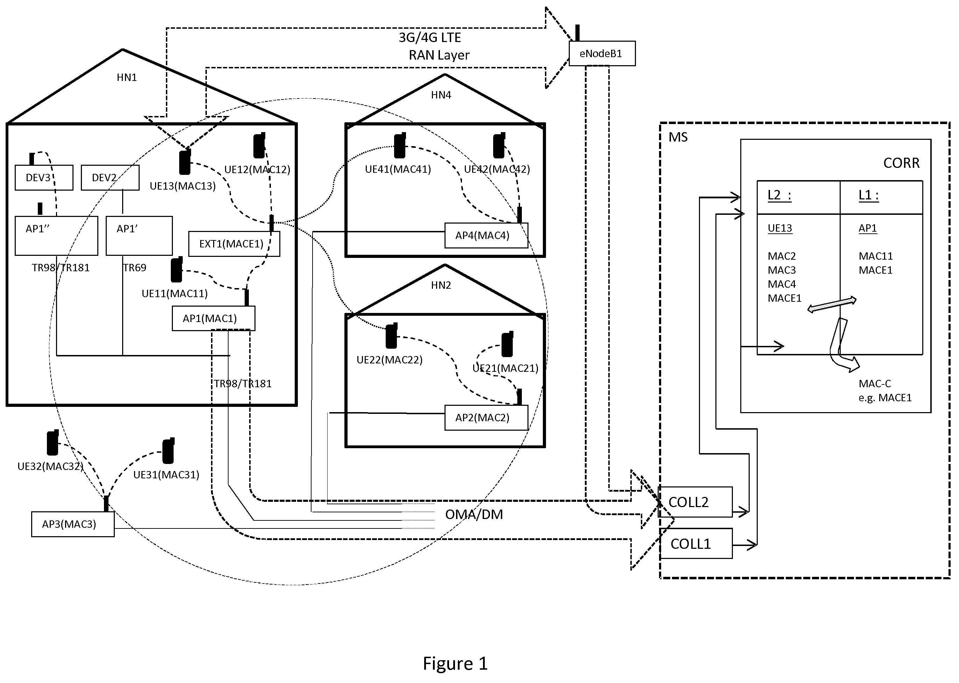

he working of the management system according to the present invention in accordance with its telecommunication environment that is shown in Figure 1 will be explained by means of a functional description of the different blocks shown therein. Based on this description, the practical implementation of the blocks will be obvious to a person skilled in the art and will therefore not be described in details. In addition, the principle working of the management method will be described in further detail.
Some embodiments of apparatus and/or methods in accordance with embodiments of the present invention are now described, by way of example only, and with reference to the accompanying drawings, in which:

Figure 1 provides an overview of an exemplary telecommunication environment with a management system by which the invention might be executed.
Figure 2 provides an exemplary embodiment of the functional blocks in the management system according to the present application.

**Description of Embodiments**

Referring to Figure 1 an overview of an exemplary telecommunication environment in which the invention might be applied is shown:

As a matter of example and possible embodiment Home Environment HN1 shows 3 different kinds of Access with different kinds of Access Points. Each one is providing access to a respective kind of Customer Premises Equipment. Access Point AP1" is providing access via a WiFi connection to the customer premises equipment - Device 3 - DEV3 such as e.g. a tablet personal computer. This Access Point AP1" is supporting the TR98/ TR181 standard. Access Point AP1' is providing access over a wireline to the customer premise equipment DEV2 e.g. respective a personal computer and a Television. This Access Point AP1' is supporting the TR069 protocol.

The 3rd access point is also a Wifi Access Point AP1 supporting the TR98/TR181 standard. The aim of the invention is shown for Access Points such as AP1 in the Home environment HN1.

- Home Environment HN1 comprises a serving Wifi Access point AP1 with its associated MAC address MAC1. The serving Wifi Access point AP1 is enabled to provide Wifi access to Wifi user equipments in its environment. The following Wifi user equipments with its associated MAC addresses are shown within the coverage of AP1 :

  User Equipment 11 : UE11(MAC11);
  User Equipment 12 : UE12(MAC12); and
  User Equipment 13: UE13(MAC13); and
  Wifi range Extender EXT1 : EXT1 (MACE1).

- Home environment HN2 comprises a serving Wifi Access point AP2 with its associated MAC address MAC2. The serving Wifi Access point AP2 is enabled to provide Wifi access to Wifi user equipments in its environment. The following Wifi user equipments with its associated MAC addresses are shown within the coverage of AP2 :

  User Equipment 21 : UE21 (MAC21); and
  User Equipment 22 : UE22(MAC22).

- A public Wifi Access Point AP3 is shown with its associated MAC addresses MAC3. The public Wifi Access point AP3 is enabled to provide Wifi access to Wifi user equipments in its environment. The following Wifi user equipments with its associated MAC addresses are shown within the coverage of AP3 :

  User Equipment 31 : UE31 (MAC31); and
  User Equipment 32 : UE32(MAC32).

- Home Environment HN4 comprises a serving Wifi Access point AP4 with its associated MAC address MAC4. The serving Wifi Access point AP4 is enabled to provide Wifi access to Wifi user equipments in its environment. The following Wifi user equipments with its associated MAC addresses are shown within the coverage of AP4 :

  User Equipment 41 : UE41 (MAC41); and
  User Equipment 42 : UE42(MAC42).

It is mentioned above that the AP1 in HN1 is enabled to serve access to UE1 2 and UE1 3. Since the quality of the Wifi access for both user equipments showed to be often bad, actual realization of the Wifi access is often unsuccessful. Hereby, a user in the Home environment HN1 decided to install the Wifi range Extender. Hereby the Wifi Range Extender helps the Access Point AP1 to bridge the Wifi distance and coverage towards UE12 and UE13.

However, in addition to the local support to AP1 also unplanned interferences (shown in Figure 1 by means of a dotted line) might be introduced by the presence of the Wifi Extender EXT1. As such the unplanned interference between the Wifi range extender EXT1(MACE1) in home environment HN1 and the user equipment UE41 (MAC41) in home environment HN4 is shown.

In order to help the management system to manage the different Home Environments properly, the management system should be aware of the presence of the Wifi Extender.

The addressed problem is the detection of this non-managed WiFi range-extender EXT1 which is installed behind the serving access point AP1 in order to help the management system MS to manage the network correctly.

The management system MS comprises a first collector COLL1, a second collector COLL2 and a correlator CORR. Both collectors COLL1 and COLL2 are both coupled to the different access points in the different telecommunication environments. The correlator CORR is coupled to the first collector COLL1 and to the second collector COLL2.

Presume that the serving access point is the access point AP1(MAC1). The goal is to detect the presence of the WiFi range-extender EXT1(MACE1) in the telecommunication environment HN1. The following steps are executed by the Management System MS :

  Step 1 : collecting by the first collector COLL1 monitoring data comprising a first list L1 of MAC addresses of connected devices whereby the connected devices being connected to the serving access point AP1 in the telecommunication environment HN1 i.e. the Management system MS gets the MACs of the associated devices to access point AP1. A possible implementation that can be used to execute this collecting step is "Host table parameters" or "Associated Device table parameters" that are defined in TR-069/181 specifications. Collecting the list L1 by means of the "Host table" or "AssociatedDevice table" does not include the MAC address of the serving AP1 itself. The list L1 contains the MAC addresses of directly connected devices :

L1(MAC11,MACE1).
Note that according to this actual example with bad quality between AP1 and the user equipments UE12 and USE13, the MAC addresses of UE12 and UE13 do not appear in the list L1. However, there might be situations where UE12 and/or UE13 have a better reach and will be connected to AP1 and thereby its MAC addresses will appear in the List L1.
We can describe this in general notifications : assume that the MAC addresses list L1 obtained via access point AP1 contains "N" MAC addresses corresponding to N connected devices. Any MAC in this list L1 is denoted by MACn where $n \in \{1,2,...N\}$ and N is the number of associated devices to this access point AP1.

Step 2 : collecting by the second collector COLL2 monitoring data comprising a second list L2 of MAC addresses of access points, the access points being located within a Wifi access range of a user equipment UE13 that is connected to the serving access point AP1 in the telecommunication environment HN1 i.e. the management system MS gets the MACs from user equipment UE13. It has to be remarked that the used user equipment UE13 should be one of the user equipments that are covered by the serving access point AP1. However, the used user equipment can be connected to the serving access point AP1 directly or via the target extender EXT1.

A possible implementation that can be used to execute this collecting step is by means of an instruction that includes the identifier called "Basic Service Set Identifier" BSSIDs which is used to identify Access Points and their clients and which is included in all wireless packets. A device parameter that can be used for this purpose is "Configuration.getAvailableWiFiNAPsResponse."

We can describe this in general notifications : assume that the MAC addresses list obtained from the user equipment UE3 contains "M" MAC addresses, each one corresponding to one of M detected access points in the neighborhood. Thus, we can denote any MAC in the second list L2 by MACm where $m \in \{1,2,...M\}$.

Under the assumption that UE13 can reach within its Wifi range AP2, AP3, AP4 and EXT1, the MAC addresses list obtained by UE1 3 is :

L2(MAC2, MAC3, MAC4, MACE1)

Step 3 : correlating by the correlator CORR the first list L1 with the second list L2 and identifying thereby a common MAC address MAC-C. The common MAC address is related to the Wifi range extender and confirms hereby its presence in the telecommunication environment HN1 i.e. the management system MS searches for any common/correlated MAC(s) mentioned in both lists. In the present example the common MAC will be MACE1 which is the MAC address of the range extender EXT1 as shown in Figure 1.

We can describe this by the following representation :

$$C\% = corr(\llbracket MAC \rrbracket\_m \, , \llbracket MAC \rrbracket\_n) \times 100\%$$

With :

C% the correlation (similarity) percentage between MACm in the L2 MAC list and MACn in the L1 MAC list; and m and n given from $m \in \{1,2,...M\}$ and $n \in \{1,2,...N\}$, respectively, as mentioned above.

It appeared from the practical experiments that some of the obtained MACs are differing from the right ones by only one character.

As an example, in the event when the connected WiFi extender with MAC address as MACE1 = (64:D1:A3:30:22:F8), it is possible that the serving access point AP1 detects it as (66:D1:A3:30:22:F8) i.e. with one character wrong, while the user equipment always detects the correct MAC address of the WiFi extender EXT1. It should be noted that this measuring fault in the first collecting step sometimes happens but not always. In order to anticipate this, an implementation with a correlation percentage C%, is described here below.

It has to be remarked that the collecting steps can be executed via any one of a radio access layer or via a wire line access layer. The connection via the internet protocol network to the management system over respectively the Radio layer is shown in Figure 1 with the broad arrow showing 3G/4G LTE Radio Access Layer via the eNodeB1. It has to be remarked here that this eNodeB1 can be integrated in the Access Point AP1 as well. The connection via the internet protocol network to the management system over respectively the wire line access layer is shown with the broad arrow showing Open Mobile Alliance Device Management OMA/DM.

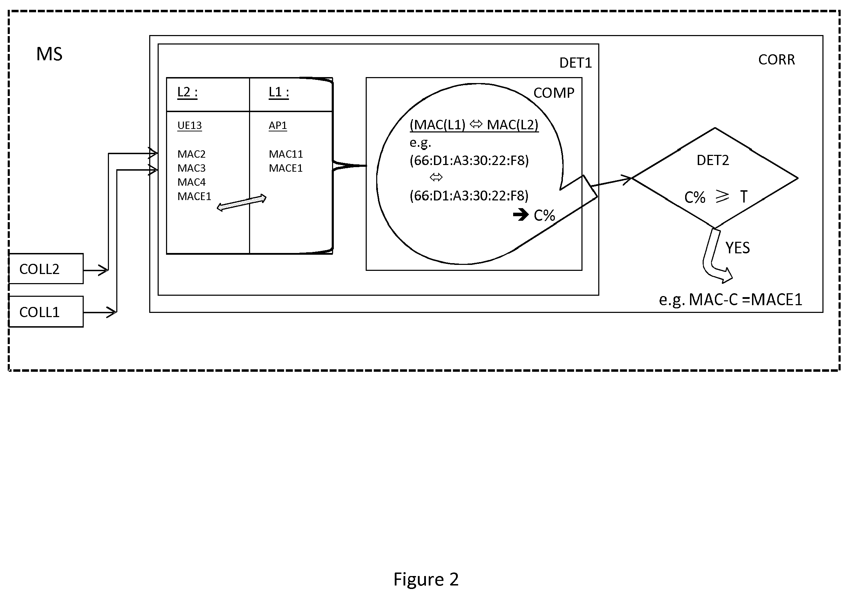

Referring to Figure 2 the correlator CORR of the management system MS comprises a first determiner DET1, which on its turn comprises a comparator COMP that is coupled to both collectors COLL1 and COLL2; and a second determiner DET2 being coupled to the first determiner DET1 via the comparator COMP.

The 3$^{rd}$ step of correlating is implemented in this way by :

- determining by the first determiner DET1 a degree of correlation, called correlation percentage C%, between a MAC address of the first list L1 and a MAC address of the second list L2. The first determiner DET1 comprises therefore the comparator COMP in order to compare the consecutive MAC characters of the MAC address of the first list L1 with the consecutive MAC characters of the MAC address of the second list L2.
- deciding by the second determiner DET2 upon "matching between the two MAC addresses" in the event when the correlation percentage C% exceeds a predefined threshold T and to thereby identify the common MAC address MAC-C.

We can describe this by the following representation :

$$C\% = (1 - 1/(Length\ (MAC))) \times 100\%$$

The management system will accept one character wrong in order to decide that there is a WiFi extender existing in the present home environment HN1.

In the above example of MAC implementation with characters, the length of the MAC address contains 12 characters. This means that a threshold T, called confidence percentage, can be defined for the situation with one wrong character as 91.6 %.

In the event when the determined correlation percentage C% is greater than or equal to the Threshold T (confidence percentage) :

$$C\% \geq 91.6\ (=T)$$

the algorithm considers the actual two MACs as "matching" and declares that the WiFi extender EXT1 is detected.

Based upon lab results the range of the correlation percentage i.e. the measure with which two MAC addresses out of L1 and L2 indeed correlates varies between : $0 \leq C\% \leq 100$ i.e. it varies from no similarity up to identically similar.

This range can be divided into two stages:

$$==> \begin{cases} T \leq C\% \leq 100 & extender\ exists \\ 0 \leq C\% < T & no\ extender\ exists \end{cases}$$

A final remark is that embodiments of the present invention are described above in terms of functional blocks. From the functional description of these blocks, given above, it will be apparent for a person skilled in the art of designing electronic devices how embodiments of these blocks can be manufactured with well-known electronic components. A detailed architecture of the contents of the functional blocks hence is not given.

While the principles of the invention have been described above in connection with specific apparatus, it is to be clearly understood that this description is made only by way of example and not as a limitation on the scope of the invention, as defined in the appended claims.

## Claims

1. A method for use by a remote device management system (MS) to detect a presence of a Wifi range extender (EXT1) in a telecommunication environment (HN1) comprising a Wifi access network, said method comprises the steps of, by said management system (MS) :

   - collecting monitoring data comprising a first list (L1) of MAC addresses of connected devices being connected to a Wifi serving access point (AP1) in said telecommunication environment; and
   - collecting monitoring data comprising a second list (L2) of MAC addresses of access points being located within a Wifi access range for a user equipment (UE13) connected to said serving access point (AP) in said telecommunication environment,

**characterized in that** said method further comprises

- correlating said first list (L1) with said second list (L2) and thereby identifying a common MAC address (MAC-C), said common MAC address being related to said Wifi range extender (EXT1) and confirms hereby its presence in said telecommunication environment (HN1).

2. The method according to claim 1, **characterized in that** said step of correlating comprises :

- determining a correlation percentage (C%) between a MAC address of said first list (L1) with a MAC address of said second list (L2); and
- deciding upon a matching between said two MAC addresses in the event when said correlation percentage exceeds a predefined threshold and thereby identifying said common MAC address (MAC-C).

3. The method according to claim 2, **characterized in that** said step of determining a correlation percentage (C%) comprises a step of comparing the consecutive MAC characters of said MAC address of said first list (L1) with the consecutive MAC characters of said MAC address of said second list (L2).

4. The method according to claim 1, **characterized in that** one of said collecting steps being executed via any one of a radio access layer and a wire line access layer.

5. A remote device management system (MS) for detecting a presence of a Wifi range extender (EXT1) in a telecommunication environment (HN1) that comprises a Wifi access network, said management system comprises :

- a first collector (COLL1) to collect monitoring data comprising a first list (L1) of MAC addresses of connected devices, said connected devices being connected to a Wifi serving access point (AP1) in said telecommunication environment; and - a second collector (COLL2) to collect monitoring data comprising a second list (L2) of MAC addresses of access points, said access points being located within a Wifi access range of a user equipment (UE13) connected to said serving access point (AP) in said telecommunication environment,

**characterized in that** said management system further comprises

- a correlator (CORR) to correlate said first list (L1) with said second list (L2) and to identify thereby a common MAC address (MAC-C=MACE1), said common MAC address being related to said Wifi range extender and confirms hereby its presence in said telecommunication environment (HN1).

6. The management system (MS) according to claim 5, **characterized in that** said correlator (CORR) comprises :

- a first determiner (DET1) to determine a degree of correlation, called correlation percentage (C%), between a MAC address of said first list (L1) and a MAC address of said second list (L2); and
- a second determiner (DET2) to decide upon a matching between both MAC addresses in the event when said correlation percentage exceeds a predefined threshold (T) and to thereby identify said common MAC address (MAC-C).

7. The management system (MS) according to claim 5, **characterized in that** said first determiner (DET1) comprises a comparator (COMP) to compare the consecutive MAC characters of said MAC address of said first list (L1) with the consecutive MAC characters of said MAC address of said second list (L2) and to determine thereby said correlation percentage (C%).

Figure 1

MS

DET1

CORR

L2 :

L1 :

COMP

UE13

AP1

MAC2
MAC3
MAC4
MACE1

MAC11
MACE1

(MAC(L1) ⇔ MAC(L2))
e.g.
(66:D1:A3:30:22:F8)
⇔
(66:D1:A3:30:22:F8)

➔ C%

DET2

C% ≥ T

YES

COLL2

COLL1

e.g. MAC-C =MACE1

Figure 2

Europäisches
Patentamt

European
Patent Office

Office européen
des brevets

# EUROPEAN SEARCH REPORT

Application Number

EP 15 30 6872

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2004/003285 A1 (WHELAN ROBERT [US] ET AL) 1 January 2004 (2004-01-01)<br>* paragraph [0004] *<br>* paragraphs [0024] - [0049] *<br>* figures 1-5 * | 1-7 | INV.<br>H04W84/04<br>H04W88/04<br>H04W8/00 |
| X | EP 1 641 183 A2 (MICROSOFT CORP [US]) 29 March 2006 (2006-03-29)<br>* paragraphs [0032] - [0064] *<br>* figures 1-6 * | 1-7 | |
| A | US 2004/185845 A1 (ABHISHEK ABHISHEK [US] ET AL) 23 September 2004 (2004-09-23)<br>* paragraphs [0046] - [0063] *<br>* paragraphs [0097] - [0102] *<br>* figures 1-21c * | 1-7 | |
| A | EP 2 442 486 A1 (BRITISH TELECOMM [GB]) 18 April 2012 (2012-04-18)<br>* paragraphs [0023] - [0047] *<br>* figures 1-3 * | 1-7 | TECHNICAL FIELDS SEARCHED (IPC) |
| A | US 8 131 209 B1 (CHEN JAMES CHIEH-TSUNG [US] ET AL) 6 March 2012 (2012-03-06)<br>* column 4, line 38 - column 11, line 32 * | 1-7 | H04W |
| A | US 2009/327391 A1 (PARK VINCENT D [US] ET AL) 31 December 2009 (2009-12-31)<br>* paragraphs [0031], [0059], [0061] * | 2,3,7 | |

The present search report has been drawn up for all claims

| Place of search | Date of completion of the search | Examiner |
|---|---|---|
| Munich | 29 April 2016 | Ghomrasseni, Z |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

................................................................

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 15 30 6872

This annex lists the patent family members relating to the patent documents cited in the above-mentioned European search report.
The members are as contained in the European Patent Office EDP file on
The European Patent Office is in no way liable for these particulars which are merely given for the purpose of information.

29-04-2016

| Patent document cited in search report | | Publication date | Patent family member(s) | | Publication date |
|---|---|---|---|---|---|
| US 2004003285 | A1 | 01-01-2004 | AT | 453265 T | 15-01-2010 |
| | | | AU | 2003258973 A1 | 19-01-2004 |
| | | | CY | 1110603 T1 | 29-04-2015 |
| | | | DK | 1520375 T3 | 26-04-2010 |
| | | | EP | 1520375 A1 | 06-04-2005 |
| | | | ES | 2338647 T3 | 11-05-2010 |
| | | | PT | 1520375 E | 03-03-2010 |
| | | | SI | 1520375 T1 | 31-05-2010 |
| | | | US | 2004003285 A1 | 01-01-2004 |
| | | | US | 2011314147 A1 | 22-12-2011 |
| | | | WO | 2004004235 A1 | 08-01-2004 |
| EP 1641183 | A2 | 29-03-2006 | AT | 539520 T | 15-01-2012 |
| | | | CN | 1783810 A | 07-06-2006 |
| | | | EP | 1641183 A2 | 29-03-2006 |
| | | | KR | 20060088000 A | 03-08-2006 |
| | | | US | 2006068811 A1 | 30-03-2006 |
| | | | US | 2007081488 A1 | 12-04-2007 |
| | | | US | 2008070563 A1 | 20-03-2008 |
| US 2004185845 | A1 | 23-09-2004 | AT | 472922 T | 15-07-2010 |
| | | | CN | 1525700 A | 01-09-2004 |
| | | | CN | 102149087 A | 10-08-2011 |
| | | | EP | 1480385 A2 | 24-11-2004 |
| | | | JP | 4514474 B2 | 28-07-2010 |
| | | | JP | 2004266835 A | 24-09-2004 |
| | | | KR | 20040077567 A | 04-09-2004 |
| | | | KR | 20100107430 A | 05-10-2010 |
| | | | KR | 20100107431 A | 05-10-2010 |
| | | | US | 2004185845 A1 | 23-09-2004 |
| | | | US | 2005201347 A1 | 15-09-2005 |
| | | | US | 2005232211 A1 | 20-10-2005 |
| | | | US | 2006274792 A1 | 07-12-2006 |
| EP 2442486 | A1 | 18-04-2012 | EP | 2442486 A1 | 18-04-2012 |
| | | | GB | 2501608 A | 30-10-2013 |
| | | | WO | 2012052700 A1 | 26-04-2012 |
| US 8131209 | B1 | 06-03-2012 | US | 8131209 B1 | 06-03-2012 |
| | | | US | 8818261 B1 | 26-08-2014 |
| US 2009327391 | A1 | 31-12-2009 | CN | 102077623 A | 25-05-2011 |
| | | | EP | 2304978 A1 | 06-04-2011 |
| | | | JP | 5384627 B2 | 08-01-2014 |
| | | | JP | 2011526472 A | 06-10-2011 |
| | | | KR | 20110036596 A | 07-04-2011 |

EPO FORM P0459

For more details about this annex : see Official Journal of the European Patent Office, No. 12/82

page 1 of 2

## ANNEX TO THE EUROPEAN SEARCH REPORT
## ON EUROPEAN PATENT APPLICATION NO.

EP 15 30 6872

This annex lists the patent family members relating to the patent documents cited in the above-mentioned European search report.
The members are as contained in the European Patent Office EDP file on
The European Patent Office is in no way liable for these particulars which are merely given for the purpose of information.

29-04-2016

| Patent document cited in search report | Publication date | Patent family member(s) | | Publication date |
|---|---|---|---|---|
| | | TW | 201008324 A | 16-02-2010 |
| | | US | 2009327391 A1 | 31-12-2009 |
| | | WO | 2009158643 A1 | 30-12-2009 |

EPO FORM P0459

For more details about this annex : see Official Journal of the European Patent Office, No. 12/82

page 2 of 2